# EUROPEAN PATENT APPLICATION

(11) **EP 1 132 831 A2**
(43) Date of publication of application: **12.09.2001**
(21) Application number: 01301767.8
(22) Date of filing: 27.02.2001
(51) Int. Cl.: G06F 17/24

(54) **Document creation and delivery**

(30) Priority: 03.03.2000 GB 0005268
(71) Applicant: KnowHow Systems Limited, Woking, Surrey GU21 3JD (GB)
(72) Inventor: Bowden, Paul, Esq., Addlestone, Surrey KT15 2PH (GB); Fox, Michael Anthony, Woking, Surrey GU 21 3JD (GB)
(74) Representative: Loveless, Ian Mark

(57) **Abstract**

A system and method for creating and delivering a document in a computer system is disclosed comprising a host server and a remote client terminal connected via a data transmission path. The host server transmits to the client terminal in electronic form prompts for guiding a user located at the client terminal through a document creation process. The user enters at the client terminal document creation information identifying the nature of a required document and document data for populating the document. A complete document is then created by an automated document creation process at the host server having a structure defined by the document creation information and populated by said document data. Lastly, the complete document is transmitted in electronic form from the host server to the remote client terminal via the data transmission path.

## Description

This invention relates to a method and apparatus for document creation and particularly to electronic document creation and delivery systems.

It is an object of the present invention to provide an improved document creation and delivery system.

According to a first aspect of the present invention, there is provided a method of creating and delivering a document in a computer system comprising a host server and a remote client terminal connected via a data transmission path in which method: the host server transmits to the client terminal in electronic form prompts for guiding a user located at the client terminal through a document creation process; the user enters at the client terminal document creation information identifying the nature of a required document and document data for populating the document; a complete document is created by an automated document creation process at the host server having a structure defined by the document creation information and populated by said document data and the complete document is transmitted in electronic form from the host server to the remote client terminal via the data transmission path.

Preferably, the document creation information is used at the host server to select clauses from a set of clauses to create said document structure, preferably according to sets of rules.

After the document has been created, a copy of the complete document is preferably stored at the host server in association with a user identification. Preferably, said copy is stored at the host server in association with a version indicator and time stamp. In preferred embodiments, a plurality of templates indicating the structures of different document types are stored at the host server.

Preferably, a substantially complete document can be made available to users at client terminals, whereby the users can alter at the client terminal text in the document within the document structure. The altered document can then be transmitted to, maintained or re-stored in electronic form at the host server where it is stored in association with a user identifier and profile which may embody security applications.

Using preferred methods it is possible to create two or more related documents simultaneously. Each complete document may contain a reference to another document stored at the host server, said reference acting as a pointer to the storage location of said other document and being maintained even if the complete document is amended.

The complete document is preferably made available or transmitted to users in formats selected by the users.

According to a second aspect of the present invention, there is provided an internet based document creation and delivery system comprising: a host server connected to at least one remote user terminal, wherein the host server has first storage means holding a plurality of document templates and a set of clauses associated with said document template (some of which may be used for multiple templates); a processor arranged to execute a document creation program based on user inputs including document creation information identifying a document template and clauses for inclusion in the template and document data for populating the clauses, said document creation program creating a complete document; second storage means for storing said complete document in association with a user identification; and document delivery means for delivering the complete document in electronic form to the user terminal.

Preferably, the user terminal includes input means for a user to enter said document creation information and document data responsive to prompts transmitted from the host server to the user terminal. In preferred embodiments, the first storage means holds said clauses as content objects in association with respective labels which are used to select said content objects.

In preferred embodiments the document delivery means comprises a converter for converting the complete document into a format specified by a user.

According to a third aspect of the present invention, there is provided a method of operating a computer to create a document according to an automated document creation process, the process comprising: transmitting in electronic form prompts to a user in accordance with a first set of rules associated with a document type to allow a user to identify clauses for inclusion in the document; transmitting in electronic form questions to a user in accordance with a second set of rules to obtain personal document data for populating the document; and compiling a complete document according to a third set of rules governing inclusion of the clauses in the document and population of the clauses by the personal document data.

According to a fourth aspect of the present invention there is provided a computer program product comprising program code means stored in a computer readable medium, the program code means being adapted to perform an automated document creation process comprising: transmitting in electronic form prompts to a user in accordance with a first set of rules associated with a document type to allow a user to identify clauses for inclusion in the document; transmitting in electronic form questions to a user in accordance with a second set of rules to obtain personal document data for populating the document; and compiling a complete document according to a third set of rules governing inclusion of the clauses in the document and population of the clauses by the personal document data; when run on a computer.

According to a fifth aspect of the present invention there is provided a method of creating and delivering a document in a computer system comprising a host server and a remote client terminal connected via a data transmission path in which method: the host server and client terminal exchange messages to enable automatic creation of a complete document at the host serveri and the complete document is transmitted from the host server to the remote client terminal via the data transmission path in an electronic format selected by a user at the remote client terminal.

The system is particularly suitable for the creation of legal documents such as assignments, conveyance documents, employment contracts.

For a better understanding of the present invention and as to how the same may be carried into effect, reference will now be made by way of example to the accompanying drawings, in which:
- Figure 1: illustrates an embodiment of a document creation and delivery system;
- Figure 2: illustrates a client terminal for use in the system of Figure 1;
- Figure 3: illustrates an internet content management system for use in the system of Figure 1;
- Figure 4: illustrates schematically how the internet content management system of Figure 3 creates and delivers a document;
- Figure 5: illustrates schematically how documents are created by the internet content management system of Figure 3;
- Figure 6: illustrates schematically method steps in the process of document creation and delivery by the system of Figure 1; and
- Figure 7: illustrates schematically the exchange of information occurring in document creation and delivery systems according to Figure 1.

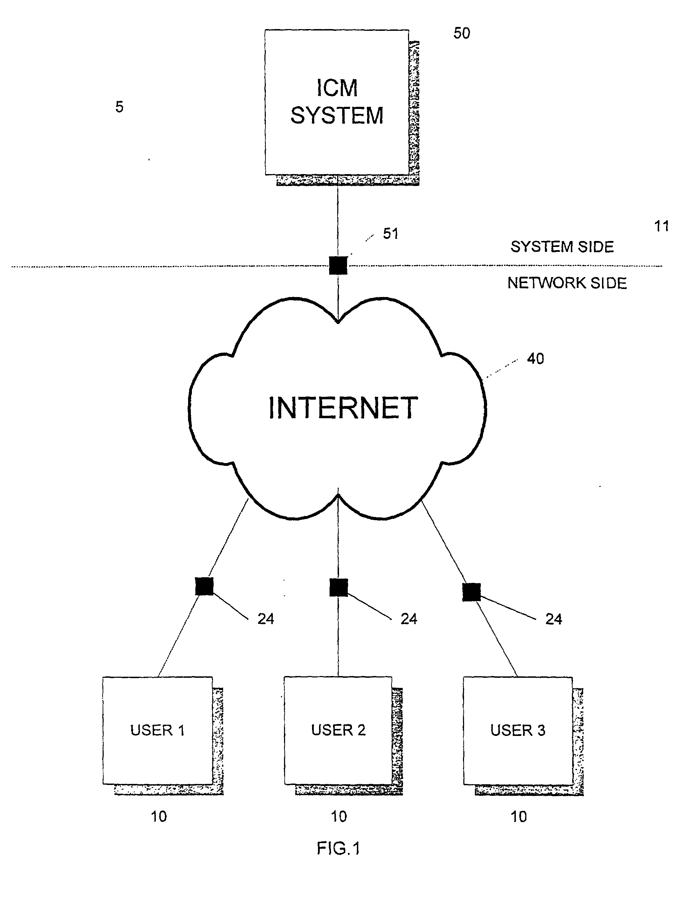

Figure 1 illustrates schematically an electronic document creation and delivery system generally designated by reference numeral 5. Document creation and delivery system 5 includes an internet content management system 50 implemented at a host server which is connected via a gateway S1 to the internet 40. A plurality of client terminals 10 are connected to the internet 40 remote from the internet content management system 50 by respective modems 24.

A broken line designated by reference numeral 11 schematically illustrates the boundary between the "system side" on which the internet content management system 50 is located and the "network side" on which the internet 40 and the client terminals 10 are located. The embodiment illustrated in Figure 1 receives from a client terminal 10 via the internet all the necessary information to create electronic documents on the system side of the electronic environment and thereafter delivers completed electronic documents to users on the network side.

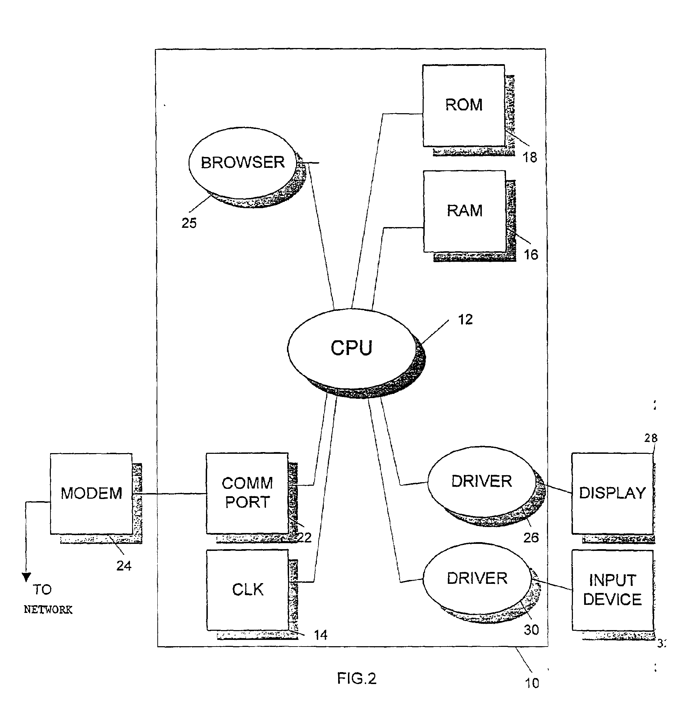

Figure 2 illustrates a preferred client terminal 10 for the document creation and delivery system of Figure 1. The client terminal 10 is a personal computer which includes a processor 12 a clock generation circuit 14 connected to the processor, a read only memory 18 and a random access memory 16. Both of the read only memory 18 and the random access memory 16 can be accessed by the CPU 12. The client terminal 10 also has a communication port 22 connected to an external modem 24. The modem 24 is connected to the internet as illustrated in Figure 1. The client terminal 10 has externally connected display and input devices 28,32. The display 28 and input 32 devices are supported by driver software 26,30 respectively. The client terminal 10 is also provided with browser software 25. The client terminals 10 thus have browser capability and enable the user to interface from a remote location with the system side of the document creation and delivery system 5.

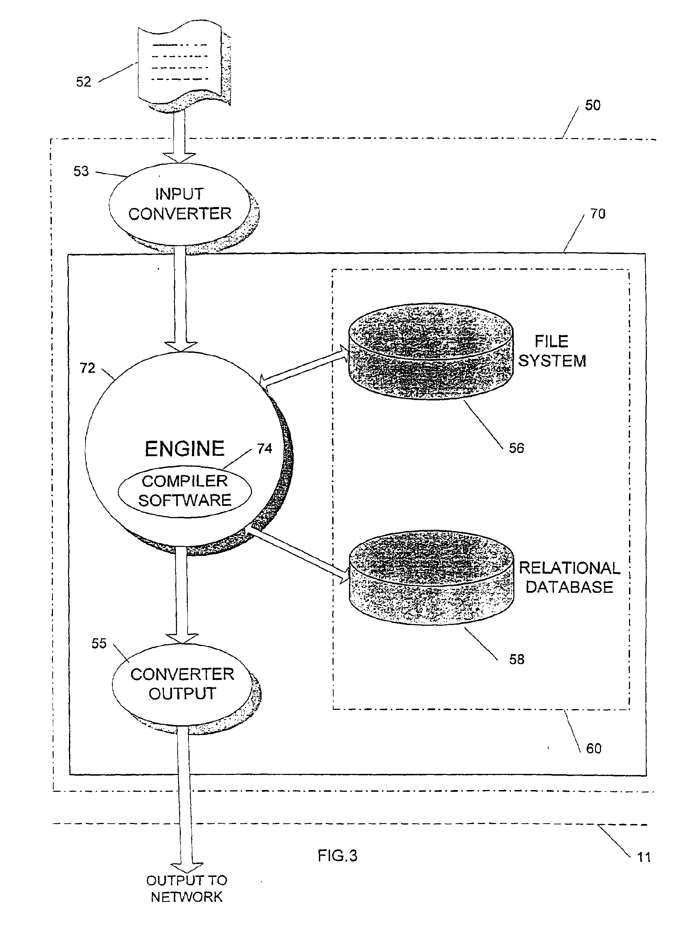

Figure 3 illustrates components of the internet content management system 50 shown in the document creation and delivery system 5 of Figure 1. The internet content management system 50 includes elements for receiving and deconstructing source documents 52, storing document content and for extracting previously stored content to be included in documents being created. The internet content management system 50 comprises an input converter 53 and a host server 70. The input converter 53 receives source documents 52 and converts the content of the source documents 52 into extensible markup language (XML) format. The host server 70 has processor functionality. The server 70 comprises a content management engine 72 which functions as a contract creation/ authoring module (CCM) and a data repository 60 in which the content of source documents 52 are optionally stored. The content management engine 72 is provided with software 74 for compiling documents created for the user as will be explained below. The data repository 60 includes a file system database 56 and a relational database 58. The file system database 56 stores XML content extracted from the source documents 52 and the relational database 58 stores information about that content. Alternatively, the XML content also may be stored in the relational database. For example the relational database 58 may store information on who created the content, when it was created, when it was last modified, labels identifying specific portions of content and cross references between related portions of content. The content management engine 72 of the server 70 can write to and extract information from the data repository 60.

The internet host server 70 also comprises an output converter 55 which can convert a newly created document from XML format into a format acceptable to the intended recipient, i.e. a user at a client terminal.

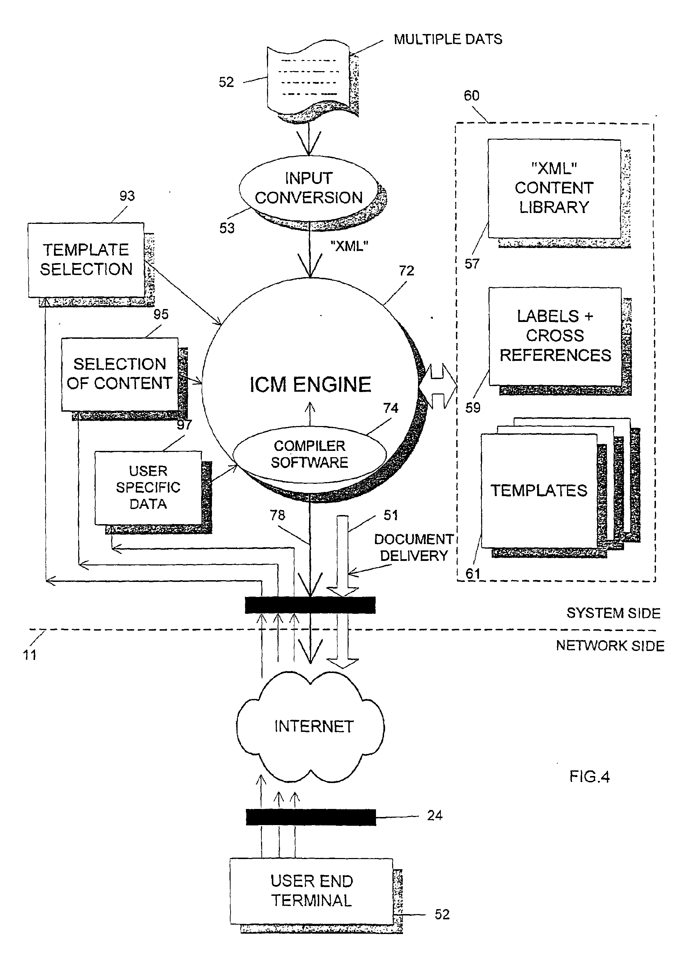

A document creation process of the system 5 shown in Figure 1 will now be explained with reference to Figures 9 to 7. Referring to Figure 4, source documents 52 are supplied to the input converter 53. The input converter 53 is preferably implemented in software on a server other than the internet content management server 70 and can accept source documents in a plurality of different electronic formats. The input converter could of course be implemented on the ICM server 70. For example, the converter 53 can accept docUments in commercially available word processing and other recognised formats (e.g. HTML, RTF, etc.). The converter 53 comprises software filters which are used to convert the received document from its original format into XML format. The content in XML format is then transferred to the content management engine 72 of the host server 70.

The content management engine 72 deconstructs each source document 52 and stores content objects and information about those content objects in the data repository 60. Information held in the data repository 60 includes a content library 57, labels and cross references 59 relating to the content objects in the content library, and empty document templates 61 having various predefined structures. Referring now to Eigure 5, the content library 57 held in the data repository 60 includes the content of source documents 52. The content is stored in the form of a plurality of content objects 63 each of which corresponds to a document component. In the described embodiments, the document components are clauses for example of a legal document. The content objects 63 are labelled according to which type of document they relate. For example, this may be achieved by regarding the content objects 63 as belonging to a plurality of collections 65 A, B, C ... X, Y based on their subject matter. The content objects 63 of each collection 65 are also labelled with structural identifiers 67 indicating to which section of a document template 81 they relate. Different structural identifiers 67 may relate to, for example, heading sections, overview sections, detail sections and appendices.

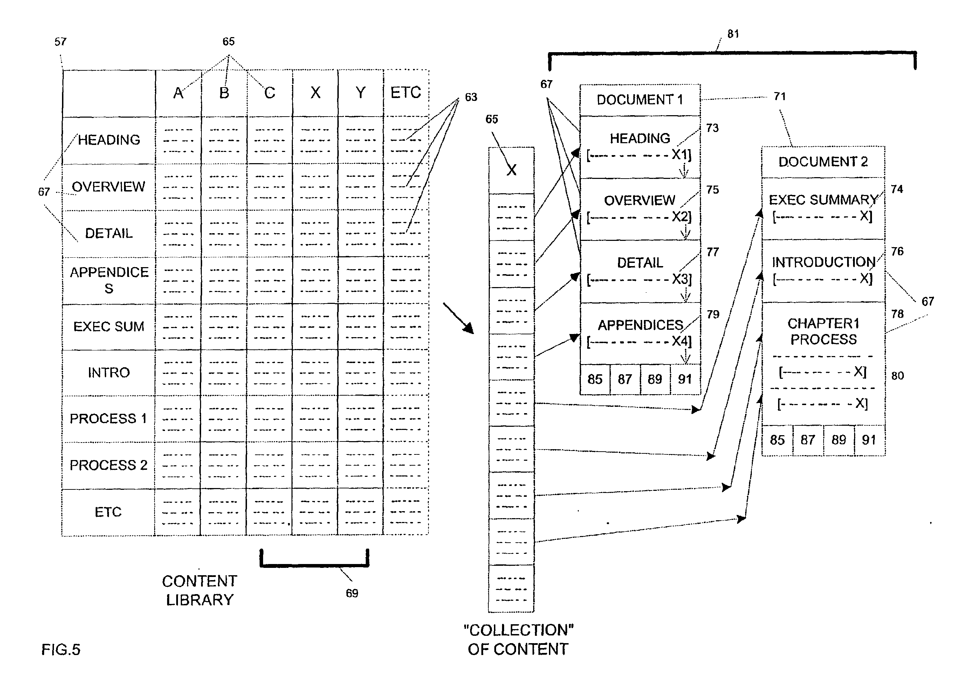

Related content objects 63 in different collections 65 are crossed referenced 69. For example, content objects referring to a particular collection 65 can be cross-referenced to facilitate simultaneous updating should the particulars of the content change. An electronic document template such as that indicated by reference numeral 81 of Figure 5 is provided for each different suite of documents. Each document template 81 has a number of documents 71 having a predetermined structure defined by a plurality of sections 67 in which content objects 63 are received. The templates have various structures which depend upon the types of documents intended to be created therefrom. The template 81 indicated includes different sections 67 identified by textual headings such as heading, overview, detail and appendix, respectively. Each section has a plurality of place holders 73-80 which act as insertion points for the content appropriate to the section. In preferred embodiments, groups 65 of logically associated content objects 63 in the content library 57 are selected simultaneously. These groups of logically associated content objects correspond to the collections 65 in the content library. Some of the content objects 63 from a collection 65 may be used in multiple resultant documents S1 in processes where two or more documents 71 are created simultaneously.

Referring back to Figure 4, the content management engine 72 of the host server 70 can communicate with the user over the internet by means of the browser enabled client terminal 10. The user provides all the document creation information 93,95,97 necessary to construct the document as will be explained below. The content management engine 72 sends prompts 78 to the user at the client terminal 10 to guide the user through the document creation process being performed at the host server 70. The user is prompted to enter information 93 regarding the nature of the required documentation which is used to identify a relevant template or set of templates 81. The user is further prompted to provide information 9S to enable the selection of content (clauses for the document).

Finally the user provides user specific data 97 for populating any clauses of the document requiring such data. Based on the document creation information provided by the user, the content management engine 72 identifies at least a relevant template or set of templates 81 and selects content objects 63 and/or collections 65 for insertion at appropriate place holders 73-80. In this way information required to create the document is transferred from the user end terminal to the content management engine 72 for use in the document creation process.

The content management engine 72 of the host server 70 runs the compiler software 79 to create the completed documents. The compiler software 74 governs the process of populating the templates 81 with clauses. Namely, the compiler software 74 controls the insertion of selected content objects 63 from selected collections 65 into respective place holders 73 to 80 of the or each document 71. The compiler software 74 also controls, where appropriate, the insertion of user specific data into the clauses of the document and removes any unwanted place holders.

When the document creation process is concluded, the content management engine 72 stores at the host server the completed document in association with a client identifier 85 indicating who generated the document. The client identifier 85 may also include a name that the user specifies, which means something in the context of the document creation process they have gone through (e.g. "NDA for XXXcompany 02032000"). This is accepted so that the user can, at a later date, review the names, dates, versions of contracts already created and select one to review or re-process. The content management engine 72 also generates and stores a version identifier 87 and a time stamp 89 in association with the completed document. The version identifier 87 indicates whether or not previous versions of the document have been created and if so, where they are stored. The time stamp 89 associated with a given document indicates when it was first generated and if applicable, when it was last modified. It will be appreciated that the preferred method can be used to create and deliver a suite of related documents simultaneously. In this case, tags 91 identifying the various documents belonging to the suite are stored in association with the completed documents.

Thus the required documentation is constructed by the host server 70 on the system side of the electronic environment according to information provided remotely by a user at a client terminal 10 on the network side of the environment. The completed document or document suite, including personal data, is then converted by converter 55 into a format acceptable to the client terminal 10 and is delivered to the end user terminal via the internet. In certain circumstances, for example, when the client terminal 10 accepts XML format, it is not necessary to employ the converter 55.

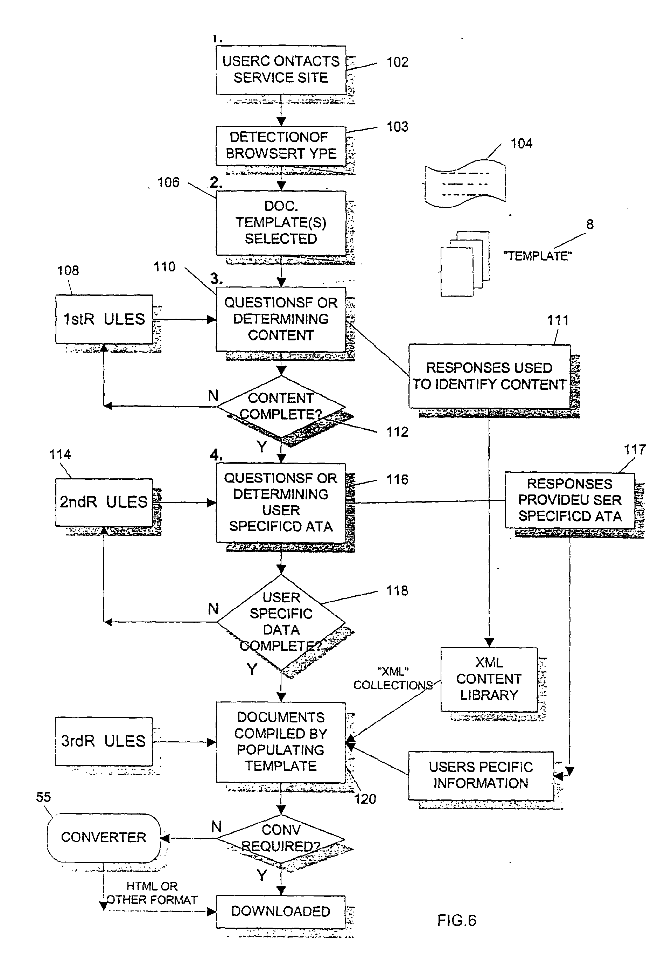

Referring to Figure 6, the user can initiate the document creation process 102 having established a connection to the document creation and delivery website from the client terminal 10. The user may contact the document creation website directly or may establish a connection via another internet node, such as a link from another website. While the connection is established, the browser enabled client terminal 10 allows the user to view a document creation screen 109 generated at host server 70. The user is then guided through the document creation process occurring at the host server 70 by the screen on the user end terminal 10.

The first thing ICM system 50 does in a user session is determine whether the browser 25 in use is capable of supporting XML. This is achieved by means of a simple detection 103 of the browser type in use. Depending upon this, the content, management engine 72 will determine whether XML is supported or not and will deliver either XML or HTML. This is true of all communications between browser and ICM, not just the document creation process

The user is led through the process of determining which document types they need and may not necessarily be given a choice in list form from which to select. It is of course also possible for the user to select the type of document desired by clicking through options on the screen.

The user may require a single document or a suite of documents comprising a plurality of related documents and this is determined by the content management engine 72 based on the information extracted from the user. The content management engine 72 selects document templates 81 accordingly 106. Responsive to the selection of specific templates 81 in step 106, the content management engine 72 presents a series of on-screen prompts to the user. These on-screen prompts typically include a succession of questions to which the user responds by inputting information at the client terminal 10. The questions are generated by the content management engine 72 according to first 108 and second 114 sets of rules. The first set of rules 108 comprises a logic tree for generating questions 110 for the user, the responses 111 to which questions identify content for inclusion in the template. The second set of rules 114 comprise a logic tree for generating further questions 116 for the user, the responses 117 to which further questions provide the content management engine 72 with the user specific data required for inclusion in the document. At the stages 112 and 118 the content management engine 72 checks whether or not the content identification and user data extraction processes, respectively, are complete. The document is then created 120 by the content management engine 72 of the host server 70 as explained with reference to Figures 4 and 5.

If the user wishes to alter a document that is within the control of the server, they achieve this by re-running the creation process, which will already be pre-populated with the responses from the last time. These can then be amended on screen and the new generated document will contain the required modifications. However, if the document is amended outside of the control of the server (i.e. not in the process, e.g. in a word processor after creation), then the server has no knowledge of the changes made and cannot maintain the document in any way afterwards. A document amended in this way, can however be stored back on the server. In the document creation process, the created documents are made available in a number of formats, including formats acceptable to a number of word processors (e.g. HTML, RTF). These are not native word processing formats, but are formats that are supported and can be read by commercially available word processors. The host server 70 communicates to tell the user a document is ready, the user can request the document to be downloaded, and the document itself is then downloaded. The host server 70 can offer the user a choice of alternative formats in which the document can be made available and the user selects a preferred format by clicking options viewed on the display 28 of the client terminal 10.

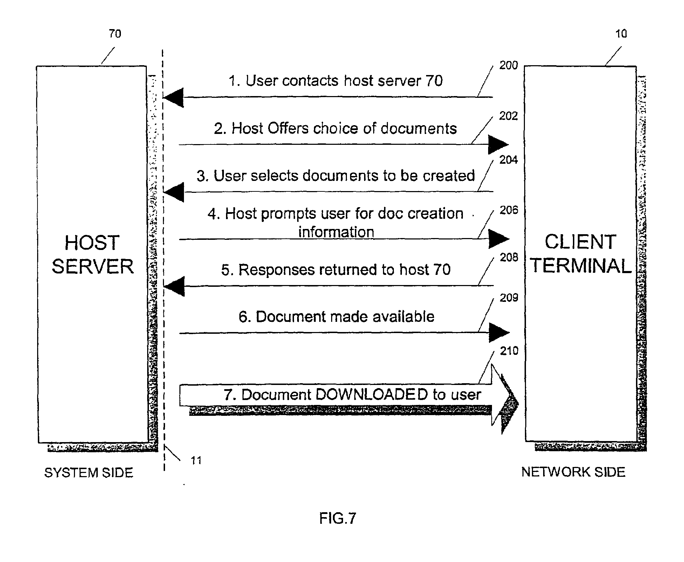

Figure 7 summarises the communication of information between the host server 70 and the client terminal 10 during the document creation and delivery process described herein.

At step 200 the user establishes contact with the host server 70.

At step 202 the host server 70 offers a choice of document types which may be created. The user is led through the process of determining which document types they need and may not necessarily be given a choice in list form from which to select.

At step 204 the user inputs a selection of one or more document types.

At step 206 the host server 70 prompts the user for document creation information. At 208 the user's responses are returned to the host server 70. At 209 the completed document, including personal data, can be made available to the user. Although not shown, the completion of the document process is communicated to the user who may then request a copy is downloaded to the client terminal. If such a request is made, the document is downloaded 210 to the user for viewing, printing or other use at the client terminal 10.

Implementation of the invention should not be limited to the configuration of the described embodiment. Specifically, the described embodiment is an example of a configuration which may be used to implement a preferred method and is not intended to define the only type of configuration or order of apparatus features/method steps which can be used.

Although, the prompts 78 generated by the host server 70 may permit amendments to clauses to be made within the framework of the document creation process, some embodiments allow substantially complete documents 51 to be amended outside the framework of the document creation process. Such amendments are however made within the original document structure. For example, this can be achieved by the user inputting information remotely or by transmitting the document to the user in his preferred format.

Thus a substantial complete document can be downloaded to or otherwise accessed by one or more users at client terminals, whereby a user can alter at the client terminal text in the document within the document structure. The altered document can then be transmitted in electronic form to the host server maintained or re-stored at the host server. It is stored at the host server in association with a user identifier and profile which may embody security applications.

Completed documents may be transmitted to or otherwise made available to users in formats selected by the users.

The assembled document may be amended by a user so that: (a) a change of a variable will also allow related changes throughout the documentation; and (b) the original questions/answers session may be amended without losing user amendments.

Although in the described embodiment, the document is delivered via the internet, the delivery network can be a different type of network e.g., any type of fixed network such as PSTN, a mobile network such as PLMN, satellite, cable or intranet type networks. Typically however, it will be a TCP/IP based network comprising, for example, routers, ISP's, dial-up connections etc.

The client terminals 10 have browser capability in line with htEp client technology. In other embodiments, client terminals 10 may include, for example a web T.V., a personal digital assistant or a WAP handset.

The configuration of the internet content management system 50, namely the arrangement and interdependence of the various functional elements including the converters 53 and 55, the content management engine 72, and the databases 56 and 58, may be varied within the scope of the invention as defined in the claims and wiL1 inevitably depend upon the application.

## Claims

1. A method of creating and delivering a document in a computer system comprising a host server and a remote client terminal connected via a data transmission path in which method:
the host server transmits to the client terminal in electronic form prompts for guiding a user located at the client terminal through a document creation process;
the user enters at the client terminal document creation information identifying the nature of a required document and document data for populating the document;
a complete document is created by an automated document creation process at the host server having a structure defined by the document creation information and populated by said document data; and
the complete document is transmitted in electronic form from the host server to the remote client terminal via the data transmission path.

2. A method according to claim 1, wherein the document creation information is used at the host server to select clauses from a set of clauses to create said document structure.

3. A method according to claim 1, wherein a copy of the complete document is stored at the host server in association with a user identification.

4. A method according to claim 3, wherein said copy is stored at the host server in association with a version indicator and time stamp.

5. A method according to claim 1, wherein a plurality of templates indicating the structures of different document types are stored at the host server.

6. A method according to any preceding claim wherein the complete document is displayed to a user at the client terminal, whereby the user can alter at the client terminal text in the document within the document structure.

7. A method according to any preceding claim, wherein two or more related documents are created simultaneously.

8. A method according to any preceding claim, wherein the complete document contains a reference to another document stored at the host server, said reference acting as a pointer to the storage location of said other document and being maintained even if the complete document is amended.

9. A method according to any preceding claim, wherein the complete document is transmitted to a user in a format selected by the user.

10. An internet based document creation and delivery system comprising a host server connected to at least one remote user terminal, wherein the host server has:
a) first storage means holding a plurality of document templates and a set of clauses associated with said document templates;
b) a processor arranged to execute a document creation program based on user inputs including document creation information identifying a document template and clauses for inclusion in the template and document data for populating the clauses, said document creation program creating a complete document;
c) second storage means for storing said complete document in association with a user identification; and
d) document delivery means for delivering the compiete document in electronic form to the user terminal.

11. A system according to claim 10, wherein the user terminal includes input means for a user to enter said document creation information and document data responsive to prompts transmitted from the host server to the user terminal.

12. A system according to claim 10 or 11, wherein the first storage means holds said clauses as content objects in association with respective labels which are used to select said content objects.

13. A system according to claim 10, 11 or 12, wherein the document delivery means comprises a converter for converting the complete document into a format specified by a user.

14. A method of operating a computer to create a document according to an automated document creation process, the process comprising:
transmitting in electronic form prompts to a user in accordance with a first set of rules associated with a document type to allow a user to identify clauses for inclusion in the document;
transmitting in electronic form questions to a user in accordance with a second set of rules to obtain personal document data for populating the document; and
compiling a complete document according to a third set of rules governing inclusion of the clauses in the document and population of the clauses by the personal document data.

15. A computer program product comprising program code means stored in a computer readable medium, the program code means being adapted to perform any of steps of claim 14 when the program is run on a computer.

16. A method of creating and delivering a document in a computer system comprising a host server and a remote client terminal connected via a data transmission path in which method:
the host server and client terminal exchange messages to enable automatic creation of a complete document at the host server; and
the complete document is transmitted from the host server to the remote client terminal via the data transmission path in an electronic format selected by a user at the remote client terminal.
